(19) Europäisches Patentamt

European Patent Office

Office européen des brevets

(11) **EP 1 271 106 A2**

(12) **EUROPEAN PATENT APPLICATION**

(43) Date of publication:
**02.01.2003 Bulletin 2003/01**

(51) Int Cl.⁷: **G01D 5/16**, G01D 5/241

(21) Application number: **02018221.8**

(22) Date of filing: **25.06.1997**

(84) Designated Contracting States:
**DE FR GB**

(30) Priority: **26.06.1996 JP 18558496**

(62) Document number(s) of the earlier application(s) in accordance with Art. 76 EPC:
**97110428.6 / 0 816 805**

(71) Applicant: **SUMITOMO METAL INDUSTRIES, LTD. Osaka-shi, Osaka 541-0041 (JP)**

(72) Inventors:
• **Shou, Guoliang Setagaya-ku, Tokyo 155 (JP)**
• **Motohashi, Kazunori Setagaya-ku, Tokyo 155 (JP)**
• **Lin, Shengmin Setagaya-ku, Tokyo 155 (JP)**

• **Yamamoto, Makoto Setagaya-ku, Tokyo 155 (JP)**
• **Matsumoto, Toshiyuki Sanda, Hyogo-ken 669-13 (JP)**
• **Harada, Muneo Nishinomiya, Hyogo-ken 663 (JP)**
• **Ooasa, Takahiko Ikoma, Nara-ken 630-02 (JP)**
• **Hirota, Yoshihiro Sakyo-ku, Kyoto 606 (JP)**

(74) Representative: **Grünecker, Kinkeldey, Stockmair & Schwanhäusser Anwaltssozietät Maximilianstrasse 58 80538 München (DE)**

Remarks:
This application was filed on 20 - 08 - 2002 as a divisional application to the application mentioned under INID code 62.

(54) **Sensor circuit**

(57)     The present invention provides a sensor circuit with small-size and reducible electric power consumption by serially connecting inverting amplifiers comprised of CMOS inverters connected in an odd number of stages so as to guarantee the linearity of the relationship between inputs and outputs, and connecting an resistance as a sensor between the inputs and outputs, or to an input.

FIG. 19

**Description**

FIELD OF THE INVENTION

The present invention relates to sensor circuits, especially one for electrically detecting characteristic changes as capacitance values or resistance values.

BACKGROUND OF THE INVENTION

A differential-type sensor such as a differential transformer can possess high sensitivity using contrary outputs of elements. For example, a sensor using a strain gauges can generates improved output when those gauges are attached on positions where strains are generated in reverse direction. Such sensor output is often used after amplifying by operational amplifier.

Recently, various and extensive sensor information must be processed, from computer control of vehicular fuel consumption, and ecology also requires reduced electric power consumption. It is demanded of a sensor circuit that it be small-sized and use reduced electric power for processing signals and realizing high sensitivity. (Reference: "Sensor Electronics", Kiyoshi TAKAHASHI, et al., Shokodo, 1984).

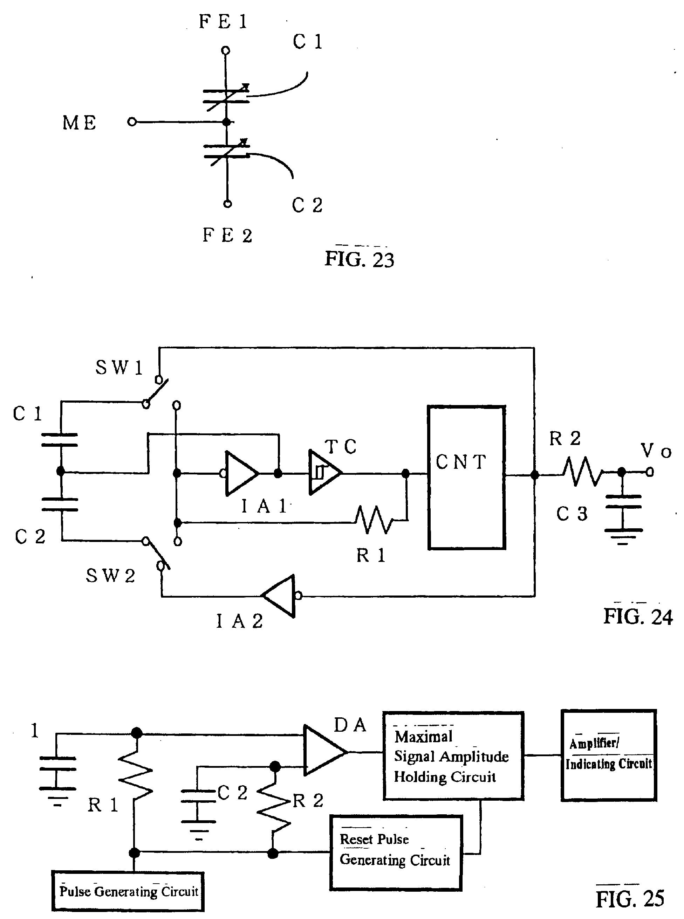

FIG. 24 shows a capacitive sensor circuit of a conventional sensor as disclosed in Japanese Patent Laid-Open Publication No. 56-166411, in which an integral circuit is structured by resistor R1 and capacitive sensor C1, a pulse is generated corresponding to the change of C1 and counted by counter CNT, and the output of CNT is converted into a voltage value by an integrating circuit.

FIG. 25 shows another capacitive sensor circuit of a conventional sensor as disclosed in Japanese Patent Publication No. 2-22338, in which a predetermined pulse is input to the first integrating circuit including resistor R2 and capacitive sensor C2, and to the second integrating circuit including resistor R1 and capacitor C1, and then the difference between them is output as a voltage signal, and the change of C2 is detected by the output.

The above sensor circuits consumes a lot of electric power because they constantly invariably generate pulses. Also, they need complicated signal processing circuits like counter circuits, differential amplifying circuits, and pulse generating circuits. The resulting large circuit size makes it difficult to combine them with sensors.

SUMMARY OF THE INVENTION

The present invention solves the above problems and has an object to provide a small-size sensor circuit for reducing electric power consumption.

A sensor circuit according to the present invention uses a pair of resistors or a pair of capacitors, with contrary characteristics given to a pair of impedances. Each pair of impedances is connected to the input of a CMOS inverting amplifier with an odd number of inverters and to the midpoint of its input and output. This kind of connection gives a closed loop-gain to the relationship between the input and the output of the CMOS inverting amplifier according to the impedance changes. Otherwise, one of the pair of impedances is connected to a CMOS inverting amplifier made of an odd number of inverters including feedback impedance, so as to combine the output of the CMOS inverting amplifier and another impedance by a capacitive coupling.

BRIEF DESCRIPTION OF THE DRAWINGS

FIG. 1 shows a conceptual diagram of a sensor circuit according to the present invention.
FIG. 2 shows a block diagram of a sensor circuit.
FIG. 3 shows another block diagram of a sensor circuit.
FIG. 4 shows a concrete example of the circuit in FIG. 3.
FIG. 5 shows another concrete example of the circuit in FIG. 3.
FIG. 6 shows the first example of a sensor circuit.
FIG. 7 shows a CMOS inverter.
FIG. 8 shows the second example of a sensor circuit.
FIG. 9 shows the third example of a sensor circuit.
FIG. 10 shows the fourth example of a sensor circuit.
FIG. 11 shows the fifth example of a sensor circuit.
FIG. 12 shows the sixth example of a sensor circuit.
FIG. 13 shows the seventh example of a sensor circuit.
FIG. 14 shows the eighth example of a sensor circuit.
FIG. 15 shows the ninth example of a sensor circuit.

FIG. 16 shows the tenth example of a sensor circuit.

FIG. 17 shows the eleventh example of a sensor circuit.

FIG. 18 shows the twelfth example of a sensor circuit.

FIG. 19 shows the thirteenth example of a sensor circuit.

FIG. 20 shows a vertical section of a sensor circuit.

FIG. 21 shows a circuit equivalent to the sensor circuit in FIG. 20

FIG. 22 shows a vertical section of another sensor circuit.

FIG. 23 shows a circuit equivalent to the sensor circuit in FIG. 22.

FIG. 24 shows a conventional sensor circuit.

FIG. 25 shows another conventional sensor circuit.

PREFERRED EMBODIMENT OF THE PRESENT INVENTION

Hereinafter, a sensor circuit according to the present invention is described with reference to the attached drawings.

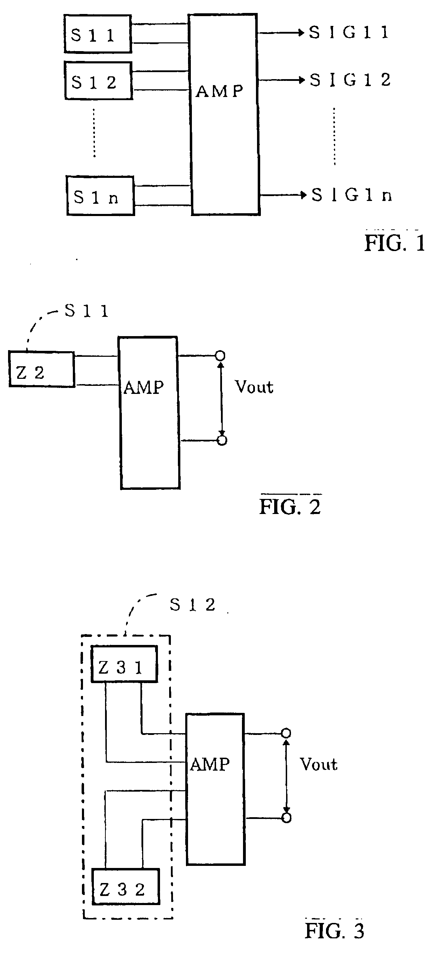

In FIG. 1, the sensor circuit includes amplifying circuit AMP, to which a plurality of sensors S11 to S1n are connected, and from which output signals SIG11 to SIG1n corresponding to each sensor are output.

The sensor can be one of two kinds. FIG. 2 shows the first type, sensor S11 with impedance Z2 connected to AMP. Output voltage Vout corresponding to the characteristic change of Z2 is output from AMP.

FIG. 3 shows the second type, sensor S12 with a pair of impedances Z31 and Z32 parallelly connected to AMP. To each of this pair, a contrary characteristic change is given. High-accuracy detection is possible by comparing the contrary characteristic changes, and the detected result is output from AMP as Vout.

For example, contrary characteristic changes occur in the cases below.

(1) A strain gauge is added to each compressing and tensing side of a leaf-spring detecting means (p242 in the reference);

(2) Sensing system of strain gauges are attached on center and edge portions of a diaphragm for detecting pressure, (p140 in the reference);

(3) Linear Variable Differential Transformer (p143 to p145 in the reference);

(4) Sensing system with a pair of Hall elements placed in a straight array which can cause the change of their resistance value due to moving of a permanent magnet fixed on the object to be measured (p127 and 128 in the reference);

(5) Sensing system with electrodes that are arrayed on both sides of the diaphragm of a high-accuracy capacitive pressure gauge in which the change of the capacity between each electrode and the diaphragm is detected by a half-bridge circuit (p142 in the reference).

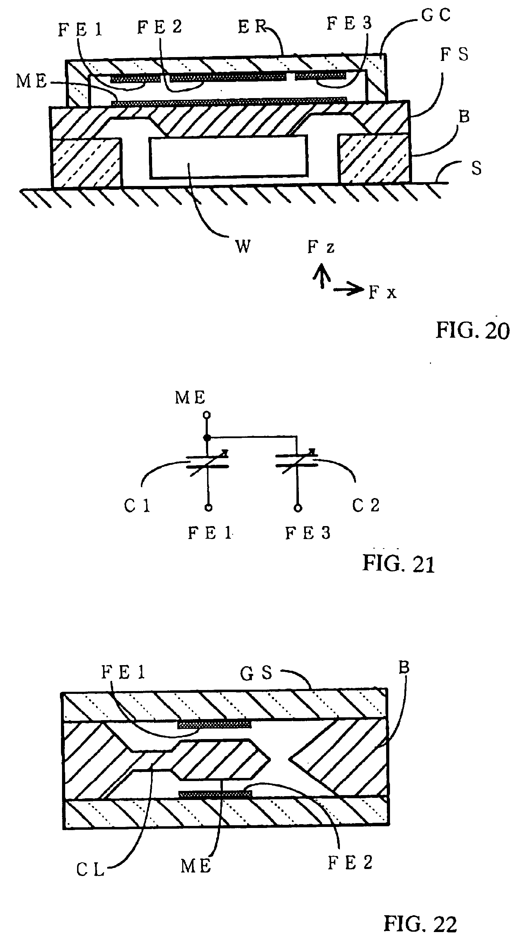

(6) An acceleration sensor in FIG. 20 is disclosed in "Development of Triaxial Accelerometers Using Piezoresistance, Electrostatic Capacitance and Piezoelectric Elements", K. OKADA, Technical Digest of the 13th Sensor Symposium, 1995, p169 to 172. In this sensor, fixed electrodes FE1, FE2 and FE3 are located facing movable electrode ME. ME is deformed according to the displacement of weight W caused by acceleration, and the capacitance value between each fixed electrode and movable electrode is measured. The equivalent circuit of an acceleration sensor is a parallel changeable capacitor shown in FIG. 21, in which changeable capacitor C1 including movable electrode ME and fixed electrode FE1, and changeable capacitor C2 including ME and fixed electrode FE3, are parallelly connected. When acceleration generates in the sensor in the array direction of FE1 and FE3 (Fx direction in FIG. 20), contrary capacitance changes occur in C1 and C2 to increase the capacitance value of one of the two and decrease that of the other. In FIG. 20, S and FS are silicon substrates, B is a glass leg and GC is a glass cover.

(7) In an acceleration sensor in FIG. 22, movable capacitors are formed between movable electrode ME set at the tip of cantilever CL and each fixed electrode FE1 and FE2, respectively set above and below ME. As shown in FIG. 23, the equivalent circuit of an acceleration sensor is a serial circuit including changeable capacitors C1 and C2. Contrary capacitance changes occur in C1 and C2 by displacement of ME caused by upward and downward acceleration in FIG. 22. In FIG. 22, B is a silicon base and GS is a glass cover.

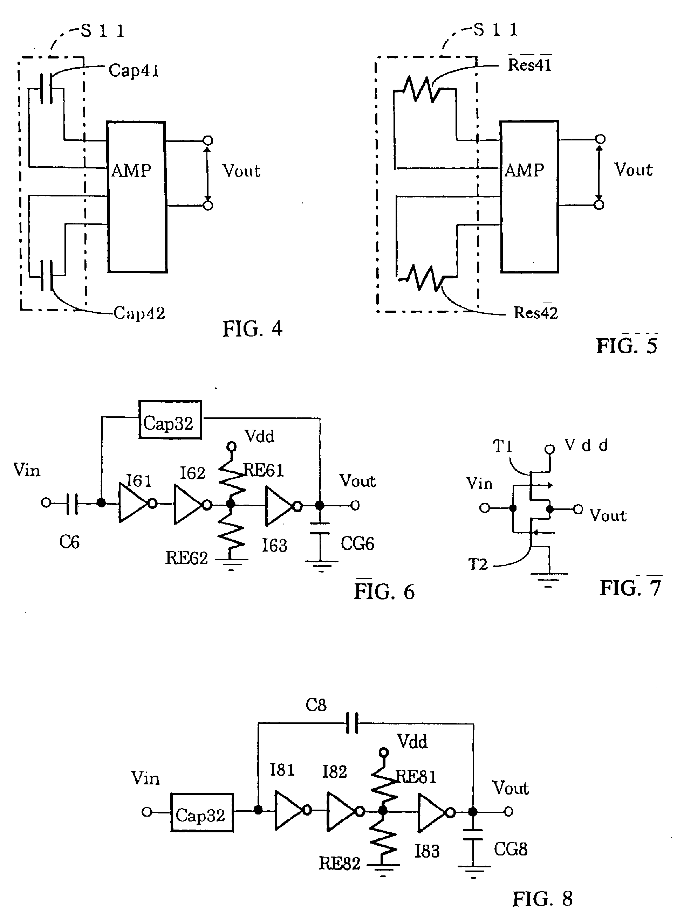

The impedances in FIG. 3 are a pair of capacitors Cap41 and Cap42 as shown in FIG. 4, or a pair of resistors Res41 and Res42 as shown in FIG. 5.

FIG. 6 shows the structure using a capacitor as the impedance in FIG. 2. In FIG. 6, capacitor Cap32 is connected as a capacitive sensor between input and output of an inverting amplifier including CMOS inverters I61 to I63 in three-stage array. To the input of the inverting amplifier, input capacitor C6 is connected. Input voltage Vin is connected to C6, and output voltage Vout is output from 163. The inverting amplifying means is guaranteed to have good linear characteristics of the relationship between input and output due to the configuration including feedback loop and high open loop-gain of I61 to I63. Assuming the threshold voltage of the inverting amplifier is Vb, the relationship between input and output is expressed by formula (1):

$$Vout - Vb = -\frac{C6}{Cap32}(Vin - Vb) \qquad (1)$$

CMOS inverters I61 to I63 are structured as in FIG. 7. The drain of n-type MOS transistor T2 is connected to the drain of p-type MOS transistor T1, a common input voltage Vin is connected to the gates of T1 and T2, and high and low voltage are connected, respectively, to the sources of T1 and T2. Output voltage Vout of the CMOS inverters is output from the drains of T1 and T2.

FIG. 8 shows the second embodiment with a capacitor serving as an impedance. In FIG. 8, feedback capacitor C8 is connected between the input and output of the inverting amplifier including CMOS inverters I81 to I83 in three-stage array. To the input of the inverting amplifier, capacitor Cap32 is connected as a capacitive sensor. Input voltage Vin is connected to Cap32, and output voltage Vout is output from 183. Similar to the circuit in FIG. 6, the relationship between the input and output in the inverting amplifier is guaranteed to have good linearity. Assuming the threshold voltage of the CMOS inverters to be Vb, the relationship between the input and output is expressed in formula (2):

$$Vout - Vb = -\frac{Cap32}{C8}(Vin - Vb) \qquad (2)$$

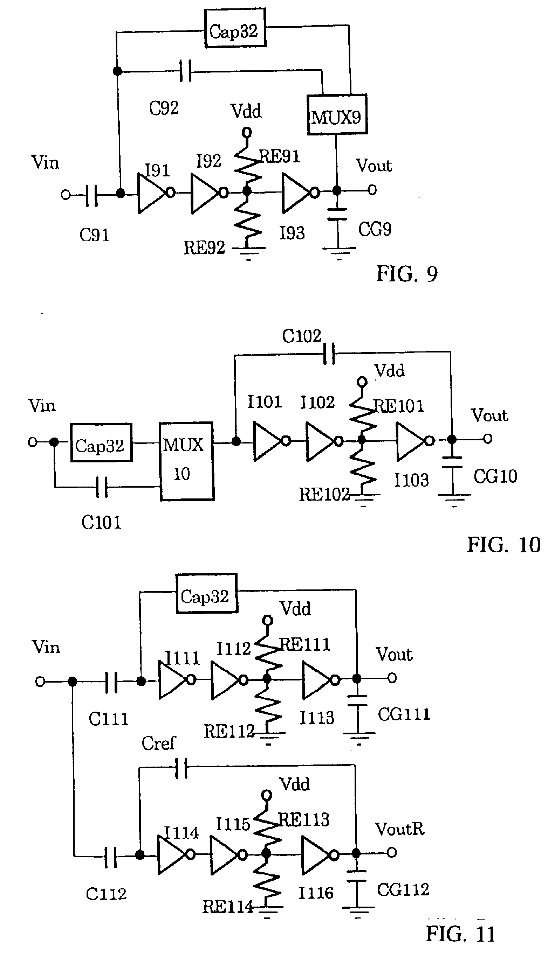

FIG. 9 shows the structure with reference capacitor C92 that is added to the structure in FIG. 6. To the input of the inverting amplifier including CMOS inverters I91 to I93, input capacitor C91 is independently connected, and reference capacitor C92 is connected parallel to Cap32. Cap32 and C92 are connected to the output of the inverting amplifier through multiplexer MUX9. To the output of the inverting amplifier, Cap32 is selectively connected when a usual sensor is activated and C92 is selectively connected for confirming the reference condition. Although MUX9 may be located at the input of the inverting amplifier, an output of the inverting amplifier is preferable as connecting point when the influence on C91 is considered. When equation (1) is not effective, for example, because of stored electric charge in Cap32, the measurement can be corrected by cutting off Cap32 and connecting C92. This results in constant values of output voltage due to the known value of capacitor.

FIG. 10 shows the structure when reference capacitor C101 is added to the structure in FIG. 8. Between input and output of the inverting amplifier including CMOS inverters I101 to I103 in three-stage array, feedback capacitor C102 is connected, and to the input of the inverting amplifier, reference capacitor C101 is connected through MUX10 parallelly to Cap32. Cap32 is selectively connected to the inverting amplifier when a usual sensor is activated, and C101 is selectively connected for confirming the reference condition. When equation (2) is not effective, for example, because of electric charge in Cap32, the measurement can be corrected by cutting off Cap32 and connecting C101. This generates constant value of output voltage due to the known value of capacitor.

In FIG. 11, the circuit in FIG. 6 is set in pairs, where one feedback capacitor is replaced by a reference capacitor. In the first circuit, the inverting amplifier including CMOS inverters I111 to I113 in three stage-array is connected to capacitive sensor Cap32, and input capacitor C111 is connected to the input of the inverting amplifier. In the second circuit, input and output of the inverting amplifier including CMOS inverters I114 to I116 in three-stages array are connected to reference capacitor Cref, and input capacitor C112 is connected to the input of the inverting amplifier. To input capacitors C111 and C112, common input voltage Vin is connected. The first circuit's output voltage Vout is a sensor-measured result of the sensor, and the second circuit's output voltage VoutR is the reference voltage of the reference capacitor. Measurement of the sensor can be executed through constant observation of the reference output in this structure.

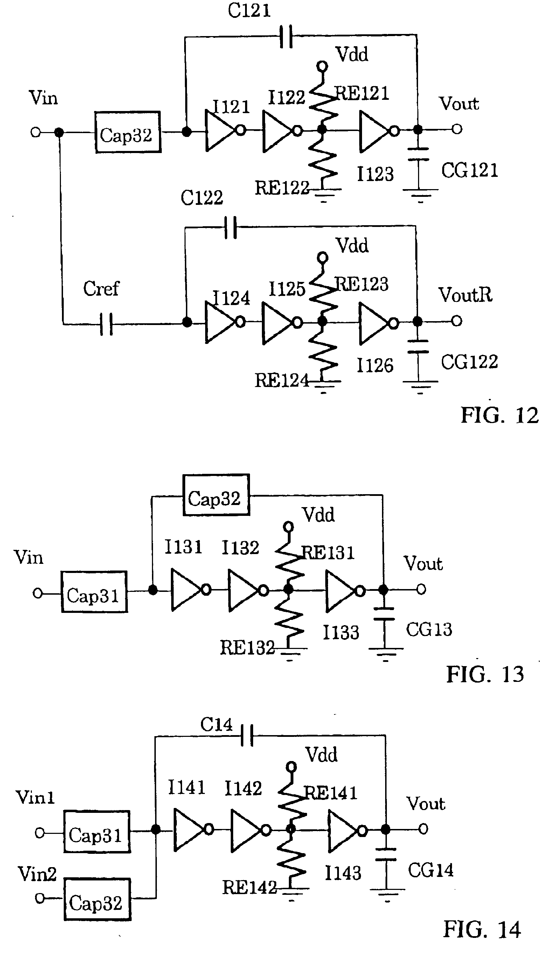

In FIG. 12, the circuit in FIG. 8 is set in pairs, where one input capacitor is replaced by a reference capacitor. In the first circuit, the inverting amplifier including CMOS inverters I121 to I123 on three-stage array has a feedback capacitor C121, and capacitor Cap32 is connected to the input of the inverting amplifier as a capacitive sensor. In the second circuit, input and output of the inverting amplifier including CMOS inverters I124 to I126 in three-stage array has a feedback capacitor C122, and reference capacitor Cref is connected to the input of the inverting amplifier. To the input of Cap32 and Cref, the common input voltage Vin is connected. The first circuit's output voltage Vout is a sensor-measured result, and the second circuit's output voltage VoutR is the reference voltage of the reference capacitor. Measurement can be executed through constant observation of the reference outputs in this structure.

FIG. 13 shows a sensor circuit using capacitive sensors Cap31 and Cap32, where input and output of the inverting amplifier including CMOS inverters I131 to I133 in three-stage array are connected to Cap32, and Cap31 is connected to the input of the inverting amplifier. Assuming that the input voltage of Cap31 is Vin, and the output voltage of the inverting amplifier is Vout, the relationship between the inputs and outputs is expressed in formula (3);

$$Vout - Vb = -\frac{Cap31}{Cap32}(Vin - Vb) \tag{3}$$

Formula (3) stipulates the output voltage is proportional to the ratio of Cap31 to Cap32. When Cap31 and Cap32 change contrarily, the change is output through amplification.

FIG. 14 shows a sensor circuit using two capacitive sensors Cap31 and Cap32, where the input and output of the inverting amplifier including CMOS inverters I141 to I143 in three-stage array are connected to feedback capacitor C14, and Cap31 and Cap32 are parallelly connected to the input of the inverting amplifier. Assuming that the input voltage of Cap31 is Vin1, that of Cap32 is Vin2, and the output voltage of the inverting amplifier is Vout, the relationship between the input and output of this circuit is shown in formula (4):

$$Vout - Vb = -\frac{Cap31 \cdot (Vin1 - Vb) + Cap32 \cdot (Vin2 - Vb)}{C14} \tag{4}$$

Formula (4) stipulates the output voltage is proportional to the sum of Cap31 and Cap32, which are multiplied by their input voltages, respectively. This will be effective to integrate the dispersed measurement values.

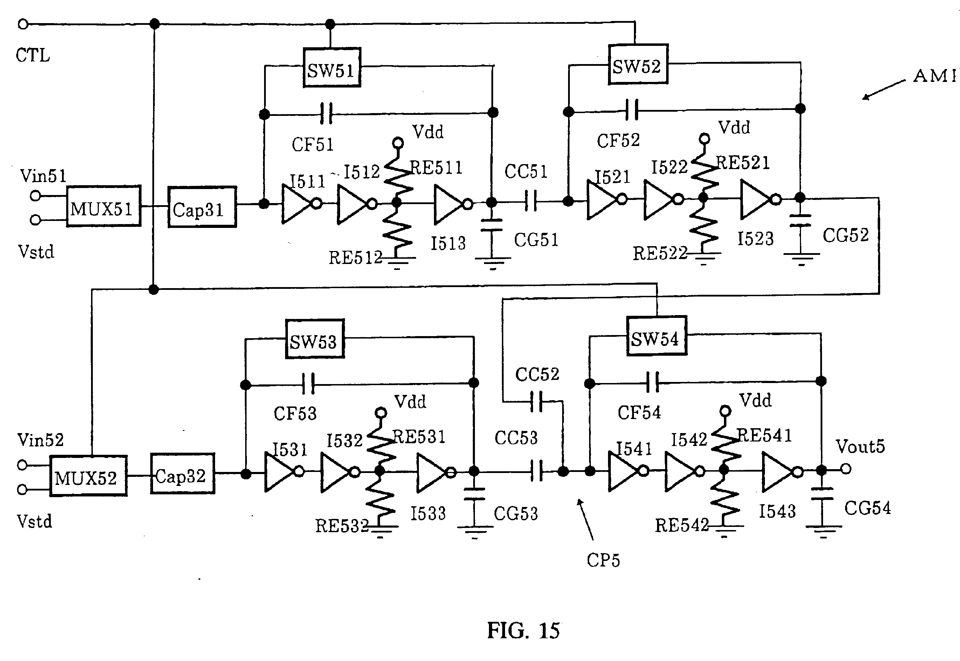

In FIG. 15, Cap31 and Cap32 are respectively connected to the inputs of CMOS inverters I511 to I513, and I531 to I533, both in three-stage array. The output of I513 is input to I511 through feedback capacitor CF51 so that the inverting output of Cap31 is generated with good linearity at the output of I513 due to the high open loop-gains of I511 to I513. The output of I533 is input to I531 through feedback capacitor CF53 so that the inverting output of Cap32 is generated with good linearity at the output of I533 due to the high open loop-gains of I531 to I533.

Through coupling capacitor CC51, the output of I513 is connected to CMOS inverters I521 to I523 in three stages, whose output is input to I521 through feedback capacitor CF52. The output of I513 is again inverted by it, and so the output of Cap31 reverts to a state of non-conversion. The outputs of I523 and I533 are respectively connected to capacitors CC52 and CC53, whose outputs are added and make capacitive coupling CP5.

The output of CP5 is connected to the input of CMOS inverters I541 to I543 in three-stage array, and their output is input to I541 through feedback capacitor CF54 so that the inverting output of CP5 is generated with good linearity at the output of I543 by the high open loop-gains of I541 to I543.

Assuming that the input voltages of Cap31 and Cap32 are Vin51 and Vin52, respectively, and the threshold voltage of CMOS inverter is Vb, output voltage Vout5 of the output of I543 is expressed by formula (5):

$$Vout5 - Vb = -\frac{Cap31 \cdot CC51 \cdot CC52}{CF51 \cdot CF52 \cdot Cf54}(Vin51 - Vb) + \frac{Cap32 \cdot CC53}{CF53 \cdot CF54}(Vin52 - Vb) \tag{5}$$

The conditions below are based on the capacitance ratio and the input voltage:

$$CC51 = CF52 \tag{6}$$

$$CC52 = CC53 = CF54/2 \tag{7}$$

$$CF51 = CF53 \tag{8}$$

$$Vin51 = Vin52 = V \tag{9}$$

Voltage V in formula (9) has a known value of voltage supplied from outside. When CF51=CF53=C0, formula (5) is changed into formula (10):

$$Vout5 - Vb = \frac{1}{2C0}(V - Vb)(Cap32 - Cap31) \tag{10}$$

Therefore, the changes of Cap32 and Cap31 are detected as their difference as shown in formula (11). When contrary changes occur to them, the changed quantity can be detected by amplifying it twice. The gain can be appropriately adjusted by changing the values of C0 and V:

$$Cap32 - Cap31 = \frac{2C0(Vout5 - Vb)}{V - Vb} \tag{11}$$

In the above circuit, the outputs of the last stages (output stages) of each three-stage CMOS inverters I63, I83, I93, I103, I113, I116, I123, I126, I133, I143, I513, I523, I533 and I543, are respectively connected to the following grounded capacitors serving as low-pass filters: CG6, CG8, CG9, CG10, CG111, CG112, CG121, CG122, CG13, CG14, CG51, CG52, CG53 and CG54. To the outputs of the intermediate stages I62, I82, I92, I102, I112, I115, I122, I125, I132, I142, I512, I522, I532 and I542, the following balancing resistors to control gains are respectively connected: RE61 and RE62, RE81 and RE82, RE91 and RE92, RE101 and RE102, RE111 and RE112, RE113 and RE114, RE121 and RE122, RE123 and RE124, RE131 and RE132, RE141 and RE142, RE511 and RE512, RE521 and RE522, RE531 and RE532, and RE541 and RE542. RE511, RE521, RE531 and RE541 are connected to supply voltage Vdd, and RE512, RE522, RE532 and RE542 are grounded. These structures prevent oscillation within the inverting amplifying circuits including feedback circuits.

Both inputs and outputs of CF51, CF52, CF53 and CF54 are respectively connected to switches SW51, SW52, SW53 and SW54, which are able to be open and closed. To Cap31 and Cap32, reference voltage Vstd can be input instead of input voltages Vin51 and Vin52 through multiplexers MUX51 and MUX52, respectively. It is possible to reduce the residual charge in Cap31 and Cap32 by closing the switches at the same time and connecting Vstd to Cap31 and Cap32. As the residual charge generates offset voltage in output voltage, the refreshment through charge reduction prevents the outputs from lowering in accuracy. Control signal CTL is set, for example, to 1 (high level) for refreshment and to 0 (low level) for normal measurement.

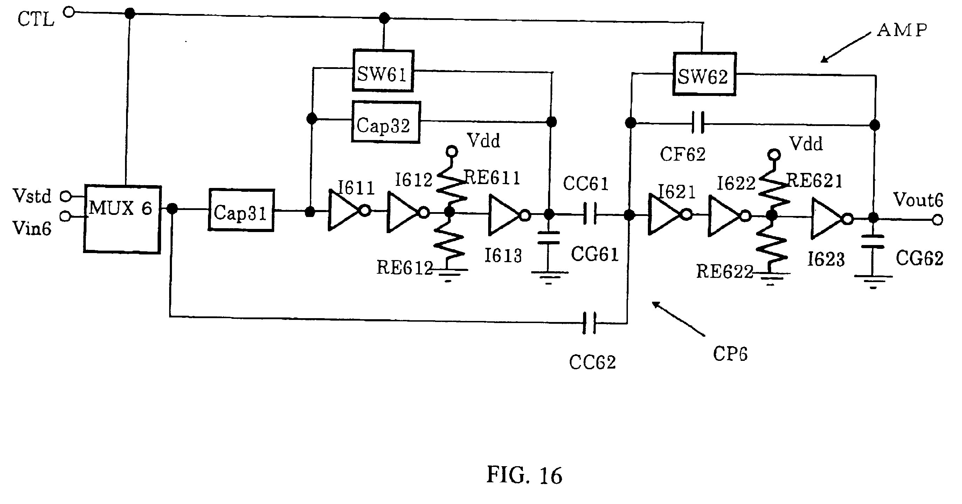

FIG. 16 shows the embodiment of amplifying circuit AMP in which Cap31 is connected to the input of CMOS inverters I611 to I613 in three-stage array, and Cap32 is connected between the output of I613 and the input of I611 as a feedback capacitor. To Cap31, input voltage Vin6 is input through multiplexer MUX6, and the inverting output of Vin6 is generated at the output of I613 with linear characteristics. To the output of I613, CMOS inverters I621 to I623 in three-stage array are connected through coupling capacitor CC61. The output of I623 is input to I621 through feedback capacitor CF62. The output of I613 is reinverting by such a structure, and so the output of I623 reverts to a non-inverting state.

The output of MUX6 is connected to I621 through coupling capacitor CC62. Consequently, the inverting output of I613 and Vin6 are added, and when the threshold voltage of the CMOS inverters is Vb, Vout6 as the output of I623 is expressed in formula (12):

$$Vout6 - Vb = \frac{\dfrac{Cap31}{Cap32} \bullet CC61 - CC62}{CF62}(Vin6 - Vb) \tag{12}$$

Formula (13) shows the condition on the capacitance ratio:

$$CC61 = CC62 = CF62 \tag{13}$$

To Vin6, the known input value of voltage is supplied similar in formula (10).

$$Vin6 = V \tag{14}$$

Therefore, formula (12) is translated to formula (15):

$$Vout6 - Vb = \left(\frac{Cap31}{Cap32} - 1\right)(V - Vb)$$

$$(15)$$

As shown in formula (15), the changes of Cap32 and Cap31 are detected as the ratio between them. When contrary changes occur to them, the changed quantity can be detected by amplifying it twice. The gain can be appropriately adjusted according to the ratio by setting CC61 ≠CF62 or by changing the value of V.

Also in this embodiment, grounded capacitors CG61 and CG62 for preventing oscillations, and balancing resistors RE611 and RE612, and RE621 and RE622 are included. Between the inputs and outputs of Cap32 and CF62, refreshing switches SW61 and SW62 are connected, respectively. To MUX6, Vstd is input and then sent to Cap31 to be refreshed. As Vstd=Vb, and the input of I611 is also Vb, Cap31 is thus refreshed. Refreshing process is executed by control signal CTL as shown in FIG. 15.

Though Vstd in FIG. 16 is generated outside of AMP or the integrated circuit, voltage Vb in AMP can be used because Vstd is set equal to Vb.

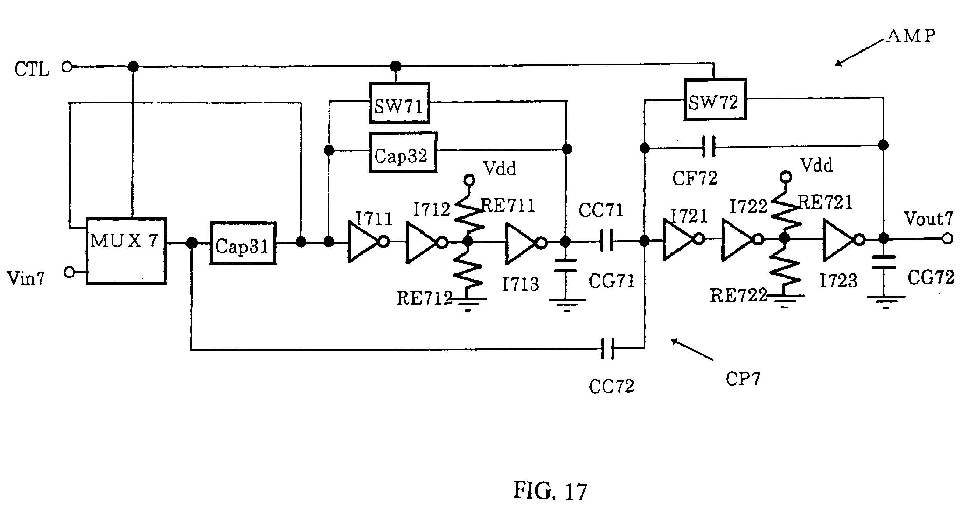

FIG. 17 shows a change in Vstd as a variation of FIG. 16. All components numbered 6 in FIG. 16 are renumbered 7 in FIG. 17. In FIG. 17, to the input of multiplexer MUX7, an input of I711 (an output of Cap31) is connected instead of Vstd. It short-cuts Cap31, which means that Cap31 can be refreshed. Not using Vstd from outside avoids the need for a circuit to generate it.

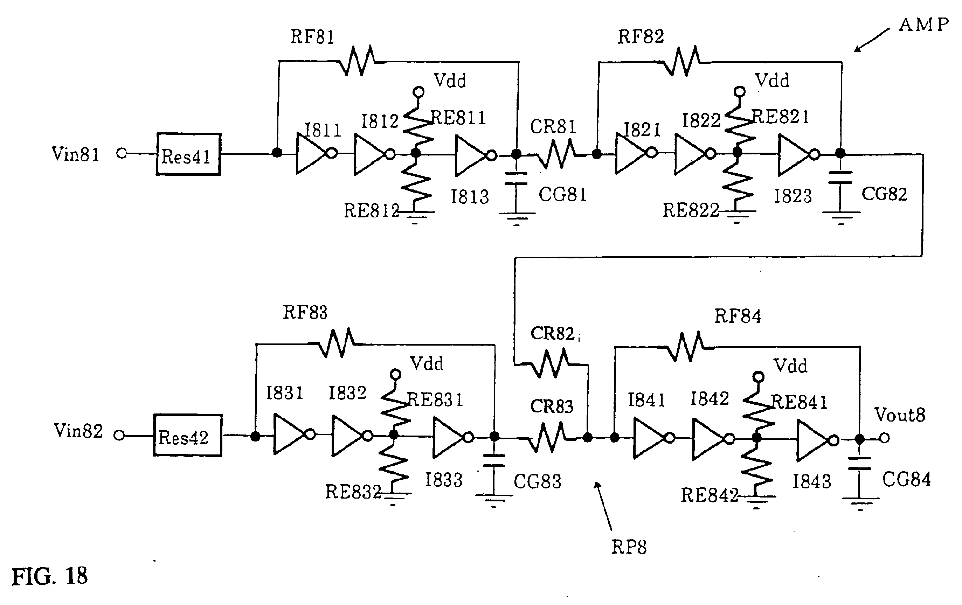

FIG. 18 shows the embodiment of amplifying circuit AMP using resistors Res41 and Res42 as impedances.

In FIG. 18, Res41 is connected to the input of CMOS inverters I811 to I813 in three-stage array and Res42 is connected to the input of CMOS inverters I831 to I833 in similar array. The output of I813 is input to I811 through feedback resistor RF81, and so the inverting output of Res41 is generated with good linearity at the output of I813 due to the high open loop-gains of I831 to I833.

To the output of I813, CMOS inverters I821 to I823 in three-stage array are connected through coupling resistor CR81, and the output of I823 is input to I821 through feedback resistance RF82. By such a structure, the output of I813 undergoes inversion again and so the output of Res41 is reverts to non-inversion state. The output of I823 and I833 is respectively connected to resistors CR82 and CR83 whose output is added at and make resistive coupling RP8.

The outputs of RP8 is input to CMOS inverters I841 to I843 in three-stages array, whose output is input to I841 through feedback resistor RF84. Accordingly, the inverting output of RP8 is generated with good linearity at the output of I843 due to high loop-gains of I841 to I843.

Assuming the input voltages of Res41 and Res42 to be Vin81 and Vin82, respectively, and the threshold voltage of the CMOS inverter to be Vb, output Vout8 of I843 is expressed by formula (16):

$$Vout8 - Vb = -\frac{RF81 \cdot RF82 \cdot R84}{Res41 \cdot CR81 \cdot CR83}(Vin81 - Vb) + \frac{RF83 \cdot RF84}{Res42 \cdot CR82}(Vin82 - Vb) \tag{16}$$

The equations below are conditions on the capacitance ratio and the input voltage:

$$CR81 = RF82 \tag{17}$$

$$CR82 = CR83 = 2RF84 \tag{18}$$

$$RF81 = RF83 \tag{19}$$

$$Vin81 = Vin82 = V \tag{20}$$

When RF81-RF83=R0, formula (16) is changed into formula (21):

$$Vout8 - Vb = 2R0(V - Vb)\left(\frac{1}{Res42} - \frac{1}{Res41}\right)$$

$$(21)$$

Changes of Res41 and Rcs42 are detected as the difference of their reciprocal numbers as shown in formula (22), When contrary changes occur, the changed quantity can be detected by amplifying it twice. The gain can be adjusted by setting the values of R0 and V.

$$\frac{1}{Res42} - \frac{1}{Res41} = \frac{Vout8 - Vb}{2R0(V - Vb)} \qquad (22)$$

Similar to the above embodiments, oscillation is prevented by connecting each grounded capacitor CG81, CG82, CG83 and CG84 to the last stage of each three stages of CMOS inverter, and providing each balancing resistor RE811 and RE812, RE821 and RE822, RE831 and RE832, and RE841 and RE842 to the second stage. In a circuit having a resistor as an elementary component, refreshment is not requisite because no residual charge is generated.

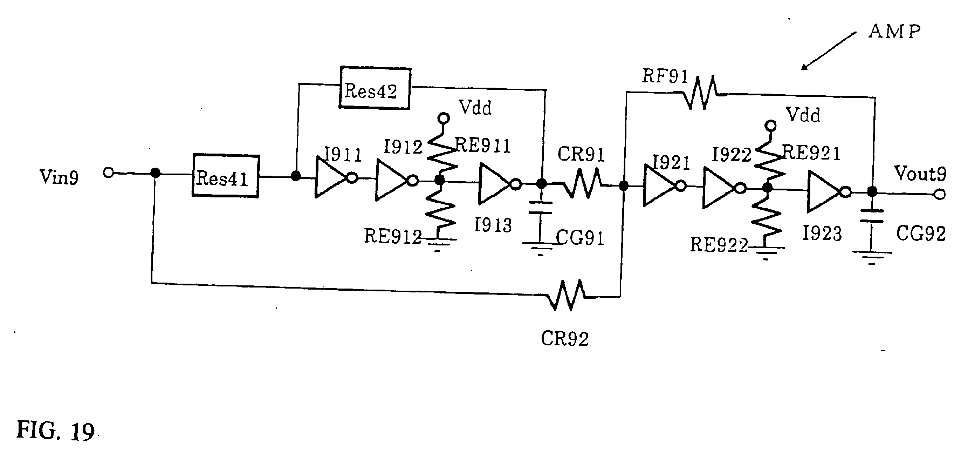

FIG. 19 shows the embodiment of amplifying circuit AMP, where Res41 is connected to the input of CMOS inverters I911 to I913 in three-stage array, and Res42 is connected between the output of I913 and the input of I911 as a feedback resistor. To Res41, input voltage Vin9 is input and its inverting output is generated at the output of I913 with good linearity. To the output of I913, CMOS inverters I921 to I923 in three-stage array are connected through coupling resistor CR91. The output of I923 is input to I921 through feedback resistor RF91, which means the output of I913 is inverted again, and so the output of Res41 reverts to a non-inverting state.

Moreover, Vin9 is connected to I921 through coupling resistor CR92 and combined with the inverting output of I913. Assuming that the threshold voltage of CMOS inverter is Vb, Vout as the output of I923 is given in equation (23):

$$Vout9 - Vb = \frac{\dfrac{Res42}{Res41} \cdot \dfrac{1}{CR91} - \dfrac{1}{CR92}}{\dfrac{1}{RF91}}(Vin9 - Vb)$$

$$(23)$$

Equations (24) and (25) are adopted as the resistance ratio and the input voltage:

$$CR91 = CR92 = RF91 \qquad (24)$$

$$Vin9 = V \qquad (25)$$

So formula (26)is obtained:

$$Vout9 - Vb = \left(\frac{Res42}{Res41} - 1\right)(V - Vb)$$

$$(26)$$

As shown in formula (26), the changes of Res42 and Res41 are detected by their own ratio. When contrary changes occur in them, the changed quantity can be detected by amplifying it twice. The gain can be adjusted according to the ratio when CR91 ≠ CR92.

Like the above embodiments, oscillation is prevented by connecting grounded capacitors CG91 and CG92, balancing resistors RE911 and RE912, and RE921 and RE922.

In a sensor circuit according to the present invention, each of a pair of impedance is connected to the input of a CMOS inverting amplifier consisted of an odd number of inverters and to the midpoint of input and output. The structure gives closed loop-gain to the relationship between the input and output of this CMOS inverting amplifier according to the impedance changes. Alternatively, one of the pair of impedances is connected to a CMOS inverting amplifier consisted of an odd number of inverters with a feedback impedance, and that inverter's output and another impedance are added by a capacitive coupling. Therefore, both the circuit size and the electric power consumption can be reduced.

**Claims**

1. A sensor circuit for detecting characteristic changes as a resistance value, comprising:

     i) a first inverting amplifier comprising an odd number of CMOS inverters (I911, I912, I913), to whose input a first resistor (Res 41) is connected, and between whose input and output a second resistor (Res 42) is connected;
         **characterised by** further comprising:

     ii) a resistive coupling for integrating the output of a resistor (CR91) connected to the output of said first inverting amplifier and the output of another resistor (CR92) parallel to said resistor (CR91) and connected to inputs of said first resistor (RES41); and

     iii) a second inverting amplifier having a second inverting amplifier comprising an odd number of CMOS inverters (I921, I922, I923) connected the output of said resistive coupling, and a feedback resistor (RF91) for connecting the output of said second inverting amplifier to its input.

2. A sensor circuit for detecting characteristic changes as a resistance value, comprising:

     i) a first inverting amplifying means having a first inverting amplifier comprising an odd number of CMOS inverters (I811, I812, I813) connected to a first resistor (Res 41), and a first feedback resistor (RF81) for connecting the output of said first inverting amplifier to its input;
         **characterised by** further comprising:

     ii) a second inverting amplifying means having a second inverting amplifier comprising an odd number of CMOS inverters (I831, I832, I833) connected to a second resistor (Res 42), and a second feedback resistor (RF83) for connecting the output of said second inverting amplifier to its input;

     iii) a first intermediate resistor (CR81) connected to the output of said first inverting amplifying means;

     iv) a third inverting amplifying means having a third inverting amplifier comprising an odd number of CMOS inverters (I821, I822, I823) connected to said intermediate resistor (CR81), and a third feedback resistor (RF82) for connecting the output of said third inverting amplifier to its input;

     v) a resistive coupling for integrating the output of said second inverting amplifying means and the output of said third inverting amplifier by parallel resistors (CR82, CR83); and

     vi) a fourth inverting amplifying means having a fourth inverting amplifier comprised of an odd number of CMOS inverters (I841, I842, I843) connected to the output of said resistive coupling, and a fourth feedback resistor (RF84) for connecting the output of said fourth inverting amplifier to its input.

3. The sensor circuit according to claim 1 or 2 **characterised in that** the first resistance (Res 41) and/or the second resistance (Res 42) is a resitive sensor.

FIG. 1

FIG. 2

FIG. 3

S 1 1

Cap41

AMP

Vout

Cap42

FIG. 4

S 1 1

Res41

AMP

Vout

Res42

FIG. 5

Vin

Cap32

Vdd

RE61

I61    I62

Vout

C6

RE62    I63    CG6

FIG. 6

T1    Vdd

Vin

Vout

T2

FIG. 7

C8

Vin

Vdd

RE81

I81    I82

Vout

Cap32

RE82    I83    CG8

FIG. 8

FIG. 9

FIG. 10

FIG. 11

FIG. 12

FIG. 13

FIG. 14

FIG. 15

EP 1 271 106 A2

FIG. 16

EP 1 271 106 A2

FIG. 17

FIG. 18

FIG. 19

EP 1 271 106 A2

FIG. 20

FIG. 21

FIG. 22

FIG. 23

FIG. 24

FIG. 25